# EUROPÄISCHE PATENTSCHRIFT

(11) **EP 3 725 041 B1**
(45) Veröffentlichungstag und Bekanntmachung des Hinweises auf die Patenterteilung: **12.04.2023**
(21) Anmeldenummer: 18819025.0
(22) Anmeldetag: 05.12.2018
(51) Int. Cl.: H04L 12/40, H04L 45/02

(54) **VERFAHREN ZUR BEREITSTELLUNG VON INFORMATIONEN FÜR DIE LOKALISIERUNG VON FEHLERN IN EINEM KOMMUNIKATIONSNETZWERK EINES GERÄTES, ENTSPRECHEND AUSGELEGTE BUSTEILNEHMERSTATION SOWIE FAHRZEUG**
METHOD FOR PROVIDING INFORMATION FOR THE LOCALIZATION OF ERRORS IN A COMMUNICATIONS NETWORK OF AN APPARATUS, CORRESPONDINGLY DESIGNED BUS DEVICE STATION AND VEHICLE
PROCÉDÉ DE FOURNITURE D'INFORMATIONS POUR LA LOCALISATION D'ERREURS DANS UN RÉSEAU DE COMMUNICATION D'UN APPAREIL, STATION PARTICIPANTE À UN BUS CONÇUE DE MANIÈRE CORRESPONDANTE ET VÉHICULE

(30) Priorität: 15.12.2017 DE 102017222880
(43) Veröffentlichungstag der Anmeldung: 21.10.2020
(73) Patentinhaber: VOLKSWAGEN AKTIENGESELLSCHAFT, 38440 Wolfsburg (DE)
(72) Erfinder: MEIER, Alexander, 38442 Wolfsburg (DE)
(86) Internationale Anmeldenummer: PCT/EP2018/083639
(87) Internationale Veröffentlichungsnummer: WO 2019/115311

(56) Entgegenhaltungen:
- DE-A1- 10 121 061
- DE-A1-102006 036 322
- US-A1- 2008 219 274

## Beschreibung

Die Erfindung betrifft das technische Gebiet der seriellen Datenübertragung zwischen elektronischen Komponenten, insbesondere Steuergeräten, Sensoren und Aktoren, die über ein Bussystem vernetzt sind. Im Besonderen geht es dabei um die Bereitstellung von Informationen für die Fehlerbehandlung, wenn im Kommunikationssystem Fehler erkannt worden sind. Solche Steuergeräte werden vielfach in Kraftfahrzeugen eingesetzt. Vernetzte Steuergeräte, Sensoren und Aktoren werden auch in anderen Gebieten der Technik eingesetzt, z.B. in der Automatisierungstechnik, Prozesstechnik usw. Die Erfindung betrifft ebenso eine entsprechend ausgelegte Busschnittstelle sowie ein entsprechend ausgelegtes Computerprogramm.

In modernen Fahrzeugen werden eine Vielzahl von Steuergeräten verbaut. Alleine für den Antriebstrang werden eine Anzahl Steuergeräte eingesetzt, so z.B. Motor-Steuergerät, Getriebe-Steuergerät, ESP-Steuergerät und weitere. Zu erwähnen ist auch die Klasse der Steuergeräte, die für Regelungen im Fahrwerksbereich zuständig sind. Solche sind Steuergeräte zur elektronischen Fahrwerkseinstellung oder Steuergeräte zur Fahrdynamik-Regelung oder Steuergeräte, die als Lenkhilfe fungieren, wie z.B. die geschwindigkeitsabhängige Servolenkung. Daneben gibt es auch noch weitere Steuergeräte, die im Bereich der Fahrzeugkarosserie verbaut werden und für bestimmte Komfortfunktionen sorgen. Als Beispiele werden genannt die Tür- oder Fensterheber-Steuergeräte, Klimaanlage-Steuergeräte, Sitzverstellungs-Steuergeräte, Airbag-Steuergeräte u.a. Dann gibt es weiterhin die Klasse der Steuergeräte, die zu dem Infotainment-Bereich zählen, wie Kamera-Steuergerät zur Umfeldbeobachtung, Navigationsgerät, RADAR- oder LIDAR-Gerät, Kommunikationsmodul und Entertainmentmodul mit TV, Radio, Video und Musik-Funktion.

Typischerweise werden die Steuergeräte der verschiedenen Kategorien jeweils mit einem separaten, für die Gerätekategorie entsprechend ausgelegten Bus vernetzt. Es können daher mehrere verschiedene Bussysteme im Fahrzeug eingesetzt werden. Die verschiedenen Bussysteme können dabei über Gateways miteinander verbunden sein, um einen Datenaustausch zu ermöglichen. Im Bereich der Antriebstrang-Steuergeräte wird typischerweise der CAN-Bus eingesetzt, ebenfalls im Bereich der Komfort-Steuergeräte. Im Infotainment-Bereich kommen auch andere Bussysteme zum Einsatz, wie Bussysteme die auf Ethernet-Technologie beruhen, z.B. AVB (Audio Video Bridging) der auf der Standard-Familie nach IEEE 802.3 Standard basiert. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus).

Als weiteres Beispiel wird das Ethernet-Bussystem zunehmend im Kraftfahrzeug eingesetzt. Die Ethernet-bezogenen Standards werden mit einer führenden 802 gekennzeichnet (z.B. IEEE 802.1, IEEE 802.2, IEEE 802.3, etc.). Für den Kfz-Bereich wurden die Ethernet-Varianten IEEE 100BASE-T1 und IEEE 1000BASE-T1 entwickelt. Dabei wird die Übertragung von Daten in Vorwärts- und Rückwärtsrichtung wie beim CAN-Bus über nur ein verdrilltes Leitungspaar bewerkstelligt.

Der dominierende Bus im Kfz-Bereich ist der CAN-Bus (Controller Area Network) gemäß ISO-Norm. Der CAN-Bus wurde in den achtziger Jahren entwickelt und 1994 standardisiert. Die entsprechende ISO-Norm hat die Nummer ISO 11898. Es gibt eine Norm für den Highspeed-Bereich bis 1 Mbit/s, das ist die Norm ISO 11898-2. Dann gibt es eine Norm für den Lowspeed-Bereich bis 125 kBit/s, das ist die Norm ISO 11898-3. Durch das anwachsende Datenaufkommen ergeben sich immer höhere Buslasten auf den CAN-Bussen. Dies führte zu einer Weiterentwicklung des CAN-Busses. Der erweiterte CAN-Bus ist unter dem Begriff CAN FD-Bus bekannt. FD steht dabei für Flexible Data Rate. Bei dieser CAN-Bus Variante wird die Datenrate umgeschaltet. Für die Arbitrierungsphase bleibt die Datenrate niedrig, wie beim klassischen CAN-Bus. Für die Übertragung der Nutzdaten wird auf eine höhere Datenrate umgeschaltet. Überträgt man die Nutzdaten einer CAN-FD-Botschaft schneller, so verkürzt sich die Dauer der Busbelegung; und die Buslast verringert sich. Wenn die Übertragungsdauer im gleichen Rahmen bleibt wie bei den klassischen CAN-Botschaften, könnten größere Datenmengen mit einer CAN-FD-Botschaft transportiert werden. So wurde es auch bei CAN FD realisiert. Statt des 8 Byte langen Nutzdatenfeldes wird bei CAN FD ein 64 Byte langes Nutzdatenfeld eingesetzt. Die Datenrate steigt für die Übertragung des Nutzdatenfeldes bei einer Umsetzung z.B. von 500 kbit/s auf 2 Mbit/s an.

In der Automobilindustrie sind in Bezug auf Menge und Komplexität der im Fahrzeug verbauten elektrischen Systeme zwei Trends zu erkennen. Zum einen nimmt die Anzahl der Fahrzeugfunktionen, die durch Elektronik realisiert bzw. unterstützt werden, deutlich zu. Zum anderen können Fahrzeuge in hohem Maße individualisiert werden. Der Kunde kann dadurch aus einem umfangreichen Repertoire aus Motorisierung, Fahrerassistenz-, Komfort- und Infotainmentsystemen auswählen. Dadurch nimmt die Variantenvielfalt der verbauten elektronischen Systeme in Fahrzeugen des gleichen Typs signifikant zu.

Die Steuergeräte eines Fahrzeugs bilden ein komplexes, verteiltes Kommunikationssystem. Sofern es darin zu einem Fehler in der Kommunikation kommt, führt dies zu funktionalen Einschränkungen, die für den Kunden erlebbar sind. Gleichzeitig ist es schwer, die Ursache des Fehlers zu identifizieren, da nicht klar ist, welche der beteiligten Komponenten der Verursacher ist.

Damit ein Fahrzeug repariert werden kann, muss zunächst die Fehlerursache ermittelt werden. Dies geschieht, indem von den Fehlersymptomen auf die wahrscheinliche Ursache geschlossen wird. Es gibt verschiedene Arten von Fehlersymptomen:
- Fehlerspeichereinträge
- Kundenwahrnehmungen
- Funktion gegeben / nicht gegeben
- Messergebnisse (z. B. Spannung, Widerstand oder Strom)
- Stellgliedtest erfolgreich / nicht erfolgreich (vgl. Abschnitt 2.1.1)
- Inhalt von Messwertblöcken.

Im Falle einer Störung eines elektrischen Systems ist es für Mechaniker oftmals sehr schwierig abzuschätzen, wo die Ursache für das vorliegende Problem liegen könnte. Auch ihr Erfahrungswissen ist oft nicht hilfreich, da sich ein Fehler in unterschiedlichen Fahrzeugen auf Grund anderer Konfiguration unterschiedlich auswirken kann. Das Problem bei der Fehlerursachensuche beim Kundenservice / Werkstattaufenthalt besteht auch darin, dass die heute benutzten Prüf- und Diagnosesysteme nicht wissen können, was tatsächlich im konkreten Fahrzeug verbaut ist, da das Fehlersuchprogramm nicht für die konkrete Variante geschrieben wurde.

Bei den heutigen Werkstatt-Diagnosesystemen werden hauptsächlich die Fehlerspeichereinträge berücksichtigt. Wenn genau ein Ereignisspeichereintrag vorliegt, wird das passende Programm geladen und abgearbeitet.

Deshalb ist es wichtig, dass möglichst detaillierte Informationen über den erkannten Fehler und die Umstände, unter denen er aufgetreten ist, im Fehlerspeicher abgespeichert werden. Zu diesem Zweck besitzen Steuergeräte einen Fehlerspeicher in einem nichtflüchtigen Speicherbereich. Sobald ein für die Diagnose relevantes Ereignis eintritt, wird dort ein Hinweis abgelegt. Dies geschieht in Form von sogenannten DTCs, entsprechend Diagnostic Trouble Code. In einer Kfz-Werkstatt kann ein an das Fahrzeug angeschlossener Diagnosetester über die On-Board-Diagnoseschnittstelle auf alle Steuergeräte zugreifen und die Ereignisspeichereinträge auslesen und bei Bedarf löschen. Jedem DTC-Eintrag ist ein Fehlertext zugeordnet, der auf dem Diagnosetester angezeigt wird. Je nachdem, um was für ein Fahrzeugsystem es sich handelt, können für einen DTC-Eintrag neben Datum, Uhrzeit und Häufigkeit des Auftretens des eingetragenen Fehlercodes zusätzliche Messgrößen wie Geschwindigkeit, Drehzahlen, Temperaturen, Drücke und Spannungen abgelegt werden. Die Interpretation dieser Zusatzinformationen ermöglicht eine bessere Rekonstruktion der Fehlersituation.

Bei der Kommunikation zwischen den Steuergeräten können sehr unterschiedliche Fehler auftreten. Die Kfz-Bussysteme bieten jeweils spezielle Verfahren zur sicheren Erkennung von Fehlerzuständen (physikalische Fehler und Netzwerkfehler) sowie Mechanismen zur Aufrechterhaltung einer gewissen Grundfunktionalität. CAN-Schnittstellen können z. B. Kurzschlüsse oder Leitungsunterbrechungen in einem Netzwerksegment erkennen. In einigen Fällen ist es möglich, beim Ausfall einer der beiden Datenleitungen in einen Eindrahtmodus zurückzufallen und über die verbleibende Leitung eine eingeschränkte Kommunikation aufrecht zu erhalten. Beim Ausfall einzelner Netzwerkknoten in einem CAN-Netz können die verbleibenden Steuergeräte weiterhin kommunizieren. Der FlexRay-Bus bietet sich wegen der Möglichkeit, auf zwei Kanälen zu übertragen, für sicherheitsrelevante Applikationen an, da ausgewählte Daten redundant über beide Kanäle übertragen werden können. Die meisten Bussysteme bieten Fehlerschutzmaßnahmen auf der Bitübertragungsschicht, z.B. durch die Verwendung von CRC-Prüfsummen oder den Einsatz von Bitstuffing-Regeln, bei der Übertragung an. Bei zeitgesteuerten Bussen sind Timing-Fehler besonders kritisch. FlexRay-Kommunikationscontroller erkennen Abweichungen zwischen der eigenen Zeitbasis und der Zeitbasis anderer Kommunikationspartner und stellen ab einer bestimmten Differenz das Senden ein, um nicht die Kommunikation anderer Teilnehmer zu stören.

Neben der Überwachung der Datenbusse auf physikalischer Ebene können Steuergeräte i. d. R. auch Fehler ihrer Kommunikationspartner oder anderer Netzwerksegmente erkennen und entsprechende Ereignisspeichereinträge im Fehlerspeicher machen. Dies geschieht in drei Stufen:
1. Timeout-Überwachung
   Bei Unterbrechung der Kommunikation über einen bestimmten Zeitraum wird von einem Ausfall des Partnersteuergerätes oder einer Unterbrechung der Kommunikationsverbindung ausgegangen.
2. syntaktische Überwachung
   Vor allem sicherheitsrelevante Informationen bekommen eine Ende-zu-Ende-Absicherung in Form einer zusätzliche CRC-Prüfsumme.
3. semantische Überprüfung
   Durch inhaltliche Überprüfung der vom Kommunikationspartner übermittelten Daten auf Applikationsebene werden diese plausibilisiert.

Durch eine Kombination der verschiedenen Techniken können die Kommunikationsfehler von den Steuergeräten erkannt werden. Ein Fehlerspeichereintrag kann ggfs. erst nach mehrmaligem Auftreten des erkannten Kommunikationsfehlers gemacht werden, um sporadisch auftretenden Kommunikationsfehler zu eliminieren. Einzelne Bitfehler können bei Bussystemen mit hoher Datenrate durchaus auftreten und stellen keinen Reparaturfall dar.

In heutigen Kommunikationssystemen wird der Fehler typischerweise von der Teilnehmerstation erkannt, welche in Folge einer Kommunikationsstörung eine funktionale Beeinträchtigung erfährt. Typischerweise handelt es sich dabei um den Empfänger von Botschaften oder Signalen, der das Ausbleiben der Botschaften oder Signale erkennt und den Fehlerspeichereintrag setzt. Im Zuge der Komplexitätsreduktion und der Vermeidung von Abhängigkeiten ist dem Empfänger von Botschaften jedoch oft nicht bekannt, wer der Sender einer Botschaft ist, geschweige denn, welchen Weg die Botschaft durch das Netzwerk nimmt. Gerade die in Fahrzeugen eingesetzten Bussysteme, wie CAN-Bus, CAN FD-Bus, FlexRay-Bus oder LIN-Bus, sehen keine Absenderinformation im Übertragungsprotokoll vor. Je nach Fahrzeug oder Fahrzeugvariante kann es sich bei dem Absender aber um verschiedene Steuergeräte handeln.

Aus der DE 43 40 048 A1 ist ein Master-/Slave-Bussystem mit Diagnosefunktion für den Einsatz im Kfz bekannt. Bei dem Master des Master-/Slave-Bussystems ist eine Diagnoseschnittstelle vorgesehen, an die ein externer Diagnosecomputer angeschlossen werden kann. Der Master ist mit einem Speicher versehen, in dem die Anwendungsprogramme für die Slaves gespeichert sind. Bei einem gegebenenfalls erforderlichen Austausch eines Slaves im Rahmen einer Reparatur kann auf das im Master enthaltene anwendungsspezifische Programm jederzeit zurückgegriffen werden und in den neuen Slave geladen werden. Der Master enthält einen Kennungsspeicher zur Aufnahme der in den Slaves gespeicherten Kennungen, um die Slaves identifizieren zu können. Die einzelnen Kennungen können dem Master entweder von den Slaves selbst oder von dem externen Diagnosecomputer mitgeteilt werden.

Aus der DE 10 2005 014 517 A1 ist ein Verfahren zum drahtlosen Abfragen eines Messwerts bekannt. Zu Beginn sendet eine Abfragevorrichtung eine allgemeine Suchanfrage. Eine Messvorrichtung im Empfangsbereich sendet daraufhin eine allgemeine Antwortnachricht. Diese Antwortnachricht umfasst eine spezifische Adresse der Messvorrichtung. So baut die Abfragevorrichtung eine Liste auf, in der die Adressen der in Reichweite befindlichen Messvorrichtungen verzeichnet werden. Diese Vorgehensweise entspricht dem Anmeldeprozess bei dem Bluetooth Protokollstapel.

Aus der US 2008/219274 A1 ist ein Gateway zur Verbindung zweier Bus-Netzwerke bekannt. Dieser weist eine Kontrolleinheit auf, die eine Auslastung des jeweiligen Bus-Netzwerks feststellt und darauf basierend Nachrichten vom einen Bus-Netzwerk ins jeweils andere Bus-Netzwerk überträgt oder nicht. Bei der Ermittlung der Auslastung der Busnetzwerke werden Nachrichten zwischen der Kontrolleinheit des Gateways und den Busteilnehmern ausgetauscht. Ein Status der jeweiligen Busteilnehmer und hierbei evtl. auftretende Übertragungsfehler werden jeweils protokolliert.

Aus der DE 101 21 061 A1 ist eine Überwachungsvorrichtung bekannt, die an ein Bus-Netzwerk angeschlossen wird und überprüft ob eine über das Bus-Netzwerk übertragene Nachricht einer bekannten Nachricht entspricht oder fremd ist. Ist ein Gefahrenpotential der fremden Nachricht größer als ein Schwellwert, wird eine Fehlermeldung generiert.

Die DE 10 2006 036 322 A1 beschreibt über ein Gateway gekoppelte Bus-Netzwerke, an die ein Diagnosegerät ankoppelbar ist und die Interaktionen zwischen dem Diagnosegerät und Teilnehmern der Busnetzwerke.

Die Erfindung setzt sich zum Ziel, das Diagnosesystem beruhend auf den Fehlerspeichereinträgen weiter zu verbessern. Insbesondere soll der Variantenreichtum der heutigen Fahrzeuge besser berücksichtigt werden. Der Techniker beim Kundenservice soll durch Zusatzinformationen besser unterstützt werden, um die Fehlerursache zu finden. Dabei stehen insbesondere die Kommunikationsfehler im Vordergrund, weil bei Ihnen häufiger das Problem besteht, dass nicht zugeordnet werden kann, wer überhaupt die ausgefallene oder als fehlerhaft erkannte Nachricht hätte aussenden sollen.

Diese Aufgabe wird durch ein Verfahren zur Bereitstellung von Informationen für die Lokalisierung von Fehlern in einem Kommunikationsnetzwerk eines Gerätes gemäß Anspruch 1, eine entsprechend ausgelegte Busschnittstelle gemäß Anspruch 14 sowie ein entsprechend ausgelegtes Kraftfahrzeug gemäß Anspruch 15 gelöst.

Die abhängigen Ansprüche beinhalten vorteilhafte Weiterbildungen und Verbesserungen der Erfindung entsprechend der nachfolgenden Beschreibung dieser Maßnahmen.

Gemäß des Vorschlags wird bei dem Fehlerspeichereintrag auch eine Information über den Empfänger und/oder den Absender einer Botschaft eingetragen. Die Information über den Absender und/oder Empfänger einer Botschaft ist von großem Vorteil bei der Ermittlung der Ursache einer Kommunikationsstörung, da sie den Lösungsraum bei der Ursachenfindung signifikant eingrenzt. Heutzutage können Kommunikationsfehler nicht immer eindeutig geortet werden, was eine aufwändige Suche nach der Ursache erforderlich macht. Dies resultiert in hohen Reparaturkosten. In Einzelfällen kann es sogar vorkommen, dass Steuergeräte zu Unrecht getauscht werden, da sie unberechtigterweise als Verursacher des Kommunikationsproblems identifiziert werden und eine genauere Fehlereingrenzung nicht hinreichend möglich ist.

Sofern bei der Reparatur die Stromlaufpläne des Fahrzeugs vorliegen, kann bereits aus der Information von Sender und Empfänger einer Botschaft der Weg bestimmt werden, den die Botschaft normalerweise durch das Netzwerk nimmt. Damit wird das Ziel erreicht, auf möglichst einfache Art und Weise alle beteiligten Komponenten einer Kommunikationsstrecke zu ermitteln, um im Falle einer Kommunikationsstörung die Fehlerursache schnellstmöglich und damit kostengünstig zu identifizieren.

Gemäß des Vorschlags wirdin den Fehlerbericht eine Angabe über den Kommunikationspfad der von dem Kommunikationsfehler betroffenen Nachricht eingefügt. Sodann kann diese Information von dem Diagnosetester in der Werkstatt ausgelesen werden und dem Servicetechniker zur Verfügung gestellt werden, der dann eine gezieltere Fehlersuche durchführen kann.

Vorzugsweise wird die Angabe über den Sender, den Empfänger oder den Kommunikationspfad der von dem Kommunikationsfehler betroffenen Nachricht bei Eintragen des Fehlerberichts einer Tabelle in der Busteilnehmerstation entnommen, in der wenigstens verzeichnet wird, welche Nutznachricht von welcher Busteilnehmerstation versendet wird, empfangen wird oder welcher Kommunikationspfad welcher Nutznachricht zugeordnet ist. Dies hat den Vorteil, dass diese Information bei der Busteilnehmerstation bereits vorhanden ist, die den Kommunikationsfehler bemerkt. Eine weitere Kommunikation im Kommunikationsnetzwerk braucht nicht stattzufinden, das Risiko des Auftretens eines weiteren Kommunikationsfehlers bei dem Eintragen des Fehlerberichts entfällt.

Für das Anlegen der Tabelle ist es vorteilhaft, wenn die Tabelle in dem laufenden Betrieb des Kommunikationsnetzwerks automatisch erstellt wird, wobei bei Eintreffen einer Nutznachricht die Empfangsstation eine Anfragenachricht an die Busteilnehmerstationen sendet, die von derjenigen Busteilnehmerstation in einer Antwortnachricht beantwortet wird, die die Nutznachricht gesendet hat. Die Tabelle könnte auch manuell in das jeweilige Steuergerät geladen werden während einer speziellen Konfigurationsphase. Dies hätte allerdings den Nachteil, dass wegen der Variantenvielfalt eine unüberschaubare Anzahl an Konfigurationen gepflegt werden müsste, da sich Sender bzw. Empfänger einer Botschaft von Fahrzeug zu Fahrzeug unterscheiden können.

Stattdessen läuft die Konfigurationsphase bei der vorgeschlagenen Lösung praktisch während des laufenden Betriebes im Hintergrund ab. Während dieser Phase würde die Aussendung von Anfragenachrichten zur Erstellung der Tabelle neben den sonstigen im laufenden Betrieb durchgeführten Datenübertragungen stattfinden.

Zur Einleitung der Konfigurationsphase ist es vorteilhaft, wenn durch manuelles Betätigen von Schaltmitteln oder Eingeben oder Übermitteln eines Spezialcodes im Herstellerwerk nach Fertigstellung des Gerätes oder im Feld in einer Werkstatt oder einer Kundenservicestelle die Konfigurationsphase eingeleitet wird. Ggfs. kann auch mit Software-Mitteln die Konfigurationsphase im Hintergrund automatisch gestartet werden, z.B. wenn festgestellt wird, dass noch keine Tabelle angelegt wurde.

Dabei ist es vorteilhaft, wenn die Anfragenachricht ein Format hat, in dem ein Feld für den Anfragenachrichtentyp, ein Feld für die Identifikation der von dem Kommunikationsfehler betroffenen Nachricht und ein optionales Feld für die Identifikation des Busteilnehmers, von dem die Anfragenachricht versendet wird, vorgesehen wird.

Dementsprechend ist es vorteilhaft, wenn die Antwortnachricht ein Format hat, in dem ein Feld für den Antwortnachrichtentyp, ein Feld für die Identifikation der von dem Kommunikationsfehler betroffenen Nachricht und ein Feld für die Identifikation des Busteilnehmers, von dem die Antwortnachricht versendet wird, vorgesehen wird.

Auch bei der Absendung von Anfrage- und Antwortnachrichten können Fehler passieren. Deshalb ist es von Vorteil, wenn bei Ausbleiben einer Antwortnachricht in der Busteilnehmerstation, die die Anfragenachricht gesendet hat, eine Zeitüberschreitungsprüfung stattfindet, und der Eintrag in die Tabelle unterbleibt, wenn eine Zeitüberschreitung für die Antwortnachricht festgestellt wird. So wird die Konfigurationsphase schließlich beendet, auch wenn keine Antwortnachricht zu einer Anfragenachricht zurückkommt. Als Beispiel wird eine Zeitüberschreitungsprüfung mit Werten von 0 bis 5000 ms genannt.

Als weitere Überprüfungsmaßnahmen, um Kommunikationsfehler zu erkennen, können weitere Fehlerschutzmaßnahmen des Übertragungsprotokolls herangezogen werden, insbesondere eine Prüfcodeauswertung wie CRC-Prüfung, eine Prüfung auf Einhaltung einer Bitstuffing-Regel und die Auswertung von Bestätigungsnachrichten oder -Bits. Insbesondere die CRC-Prüfcode-Fehlerschutzmaßnahme, entsprechend Cyclic Redundancy Check spielt bei den Bussystemen, die im Kfz-Bereich eingesetzt werden, eine wichtige Rolle. Es kämen aber auch andere Prüfcodeauswertungen in Frage, angefangen bei einfachen Paritätsprüfungen bis hin zu Fehlerkorrekturcodes wie Reed-Solomon-Code oder Turbo-Code.

Typische Anwendungsfälle für das vorgeschlagene Verfahren sind Kommunikationsnetzwerke im Kfz-Bereich. Dort werden vorwiegend serielle Bussysteme eingesetzt von dem Typ eines CAN-Busses, entsprechend Controller Area Network-Bus, eines CAN-FD Busses, entsprechend Controller Area Network-Bus Flexible Data Rate eines FlexRay-Busses, oder eines LIN-Busses, entsprechend Linear Network-Bus. Bei solchen Bussystemen sind die beschriebenen Maßnahmen besonders vorteilhaft, weil in den entsprechenden Übertragungsprotokollen keine dedizierte Absender- und Ziel-Adressen vorgesehen sind.

Für eine weitere Absicherung und Authentifizierung der Kommunikation ist es vorteilhaft, wenn jeweils Anfragenachricht und Antwortnachricht verschlüsselt/signiert übertragen werden. Die Konfigurationsphase, in der die Stationen ihre Absender- / Empfängertabelle anlegen, ist besonders wichtig und es wäre schädlich, wenn ein Angreifer ebenfalls Zugang zu den darin ausgetauschten Informationen hätte. Eine Verschlüsselung ist nicht unbedingt nötig, wenn es nur auf die Authentizität der Inhalte ankommt. Um das zu gewährleisten, müssen die Nachrichten signiert werden.

Die Tabelle wird in vorteilhafter Weise in der Station abgespeichert, die die Anfragenachricht aussendet. Sie wertet dann auch die Antwortnachrichten von den Busteilnehmerstationen aus. Die Anfragenachricht kann gemäß einer Variante von der Station gesendet werden, die eine Botschaft empfangen hat. Sie legt dann eine Tabelle an, in der verzeichnet ist, von welcher Sendestation welche Nachricht stammt. Umgekehrt kann in einer anderen Ausführungsform die Sendestation einer Nachricht die Anfragenachricht absenden. Dann wird sie eine Tabelle anlegen und darin auflisten, welche Empfangsstation die jeweilige von ihr gesendet Botschaft empfängt.

Für eine entsprechend ausgelegte Busschnittstelle zur Verwendung bei dem vorgeschlagenen Verfahren zur Übertragung von Daten über einen seriellen Kommunikationsbus gelten die entsprechenden Vorteile wie im Zusammenhang mit den entsprechenden Verfahrensschritten erläutert.

Das Gleiche gilt für ein Kraftfahrzeug, in dem ein Kommunikationssystem eingesetzt wird, mit den entsprechend ausgelegten Busschnittstellen.

Ausführungsbeispiele der Erfindung sind in den Zeichnungen dargestellt und werden nachfolgend anhand der Figuren näher erläutert.

Es zeigen:
- Fig. 1: ein Fahrzeug mit den Kfz-Elektronik-Komponenten für die Bereiche Antrieb, Fahrwerk und Fahrerassistenz;
- Fig. 2: ein Blockdiagramm für ein Fahrzeug-Kommunikationsnetzwerk für die Bereiche Antrieb, Fahrwerk und Fahrerassistenz;
- Fig. 3: ein Blockdiagramm für das serielle Bussystem für den Bereich Antriebsstrang;
- Fig. 4: eine erste und eine zweite Variante einer Kommunikation für die Anlegung von Sendestationstabelle oder Empfangsstationstabelle im laufenden Betrieb des Kommunikationsnetzwerks;
- Fig. 5: das Format einer Anfragenachricht bei der Kommunikation für die Anlegung von einer Sendestationstabelle im laufenden Betrieb des Kommunikationsnetzwerks;
- Fig. 6: das Format einer Antwortnachricht bei der Kommunikation für die Anlegung von der Sendestationstabelle im laufenden Betrieb des Kommunikationsnetzwerks;
- Fig. 7: die Struktur einer Sendestationstabelle;
- Fig. 8: das Format einer Antwortnachricht bei der Kommunikation für die Anlegung von der Sendestationstabelle, die von einem Gateway oder einem applikativen Router gesendet wird;
- Fig. 9: das Format einer Anfragenachricht bei der Kommunikation für die Anlegung von einer Empfangsstationstabelle im laufenden Betrieb des Kommunikationsnetzwerks;
- Fig. 10: das Format einer Antwortnachricht bei der Kommunikation für die Anlegung von der Empfangsstationstabelle im laufenden Betrieb des Kommunikationsnetzwerks; und
- Fig. 11: die Struktur einer Empfangsstationstabelle.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

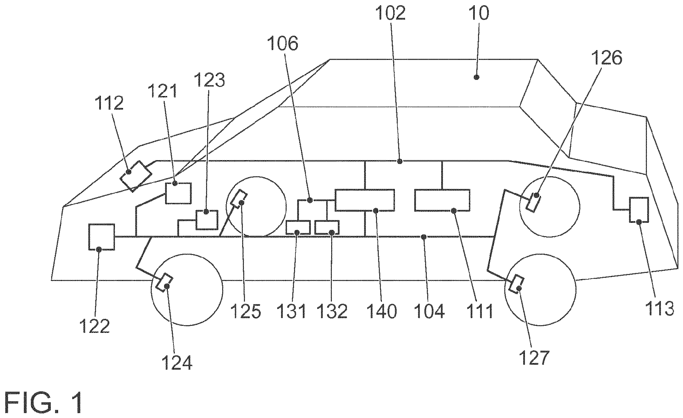

Fig. 1 zeigt ein Fahrzeug 10 mit verschiedenen elektronischen Komponenten. Dargestellt ist ein Personenkraftwagen Pkw. Als Fahrzeug kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Motorräder, Schienenfahrzeuge usw. Die Erfindung wäre allgemein bei Landfahrzeugen, Schienenfahrzeugen, Wasserfahrzeugen und Luftfahrzeugen einsetzbar. Der Einsatz der Erfindung ist primär für den Fahrzeugbereich gedacht. Allerdings kommt wie beim CAN-Bus auch der Einsatz im Feldbus-Bereich, also in der Automatisierungstechnik, Prozesstechnik, usw. in Frage. Es wird eine Vielzahl von elektronischen Steuergeräten im modernen Kraftfahrzeug eingesetzt. In Fig. 1 ist die Vernetzung einiger Steuergeräte und Sensoren dargestellt. Dabei werden drei verschiedene Klassen von Steuergeräten unterschieden. Die Steuergeräte einer Klasse sind jeweils separat vernetzt. Verbunden sind die jeweiligen Kommunikationsbusse über ein zentrales Gateway-Steuergerät 140. Die Steuergeräte der Klasse der Steuergeräte für den Bereich Fahrerassistenz sind über den Bus 102 vernetzt. Daran angeschlossen sind die Steuergeräte Fahrerassistenz-Steuergerät 111, RADAR-Gerät 112 und Ultraschallsensor-Steuergerät 113. Dabei dient das RADAR-Gerät (entsprechend Radio Detection and Ranging) zur Realisierung eines Radartempomaten oder zur Realisierung eines Abstandswarnungs- oder Kollisionswarnungsgerätes. Dazu kann auch ein LIDAR-Gerät (entsprechend Light Detection and Ranging) ergänzend oder alternativ eingesetzt werden.

Die Steuergeräte der Klasse der Steuergeräte für den Antriebstrang sind über den Bus 104 vernetzt. Daran angeschlossen sind die Steuergeräte Motor-Steuergerät 121, ESP-Steuergerät 122 und Getriebe-Steuergerät 123. Weiterhin angeschlossen an den Bus 104 sind die Raddrehzahlsensoren 124 bis 127.

Die Steuergeräte der Klasse der Steuergeräte für den Bereich Fahrwerk sind über den Bus 106 vernetzt. Daran angeschlossen sind die Steuergeräte Fahrwerk-Steuergerät 131 und Lenkhilfe-Steuergerät 122.

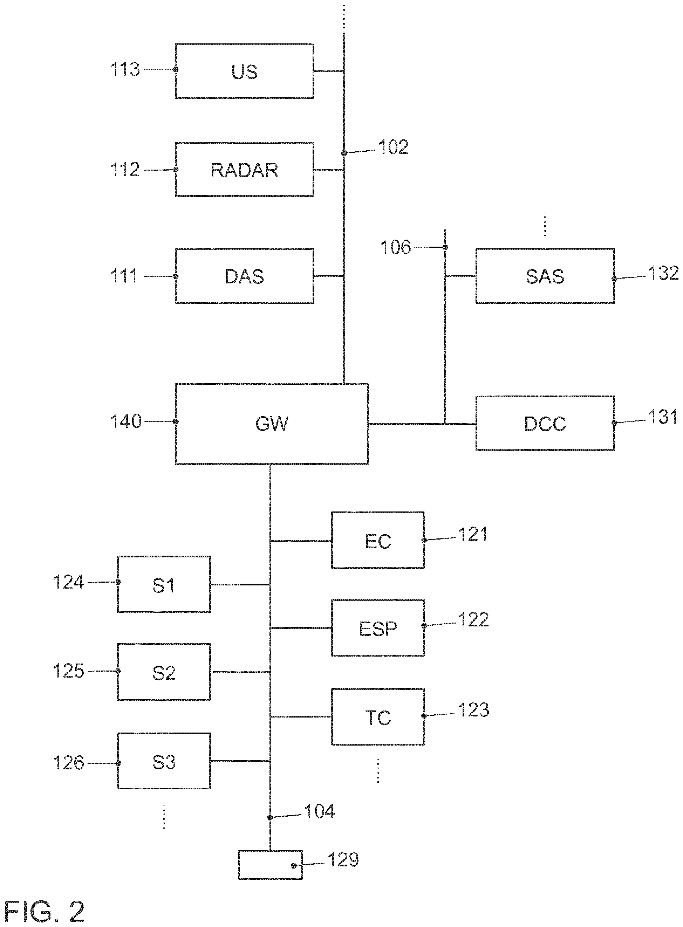

Fig. 2 zeigt das entsprechende Blockschaltbild für die Kfz-Elektronik in den Bereichen Antrieb, Fahrwerk und Fahrerassistenz. Gleiche Bezugszahlen bezeichnen in Fig. 2 dieselben Komponenten wie in Fig. 1. Die drei separaten Kommunikationsbusse 102, 104, 106 sind als lineare Busse ausgeführt. Dabei können die Busprotokolle für die Kommunikationsbusse 102, 104 und 106 nach den Bedürfnissen der dort vernetzten Steuergeräte ausgelegt sein. Z.B. könnte es sinnvoll sein, den Kommunikationsbus 106 für den Bereich Fahrwerk für eine höhere Datenrate auszulegen als die beiden Kommunikationsbusse 102 und 104. Auf Sensorsignale, die für das Fahrwerk relevant sind, z.B. bei dem Komfortmerkmal Schlaglocherkennung, muss extrem schnell reagiert werden, um die Dämpfereinstellung entsprechend anpassen zu können.

Zu dem Zweck des Austausches von Daten zwischen Teilnehmern, die an unterschiedliche Kommunikationsbusse 102, 104, 106 angeschlossen sind, ist das Gateway 140 vorgesehen. Dieses ist mit allen drei verschiedenen Bussystemen 102, 104 und 106 verbunden. Das Gateway 140 ist dazu ausgelegt, die Datenpakete, die es über den einen Kommunikationsbus empfängt, so umzusetzen, dass sie in dem Übertragungsformat des anderen Kommunikations-Busses dort weitergeleitet werden können. Wie dargestellt, ist das Gateway 140 als zentrales Gerät sowohl an den Bus 102, den Bus 104 als auch an den Bus 106 angeschlossen. Es übernimmt daher alle notwendigen Format-Umsetzungen, wenn Daten zwischen den verschiedenen Bussystemen ausgetauscht werden sollen.

Die Komponente 129, die an den Kommunikationsbus 104 des Antriebstrangs angeschlossen ist, bezeichnet eine Diagnoseschnittstelle. Hier kann ein externer Diagnosecomputer (nicht dargestellt) angeschlossen werden, über den die Fehlerspeichereinträge in den Fehlerspeichern der verschiedenen Steuergeräte abgefragt werden können.

In dem gezeigten Beispiel sind die Bussysteme 102 und 104 als CAN-Bus realisiert und der Bus 106 als CAN FD-Bus. Als physikalisches Übertragungsmedium wird in allen Bussystemen 102, 104, 106 eine verdrillte Zweidrahtleitung verwendet, an der symmetrische Differenzspannungen für die Informationsübertragung angelegt werden. Die Spannungen repräsentieren Symbole, die ein Sender gemäß dem gewünschten Bitstrom erzeugt (kodiert). Ein Empfänger verwendet den entstandenen Symbolstrom wiederum, um die enthaltenen Bits zurück zu gewinnen (dekodieren).

Bei dem CAN-Bus wird ein besonderes Busarbitrierungsverfahren eingesetzt. Durch das besondere Busarbitrierungsverfahren nach CSMA/CA (entsprechend Carrier Sense Multiplex Access / Collision Avoidance) werden Daten-Kollisionen vermieden und es setzt sich genau ein Teilnehmer auf dem Bus durch, so dass auf einen Netzwerk-Switch verzichtet werden kann. Es gibt zwei Buspegel, dominant und rezessiv. Auf dem CAN Bus setzt sich in der Arbitrierungsphase immer der dominante Buspegel durch. Ein CAN Knoten, der erkennt, dass er selbst nur den rezessiven Buspegel gesendet hat, und aber erkennt, dass der dominante Pegel anliegt, gibt bei der Arbitrierung auf.

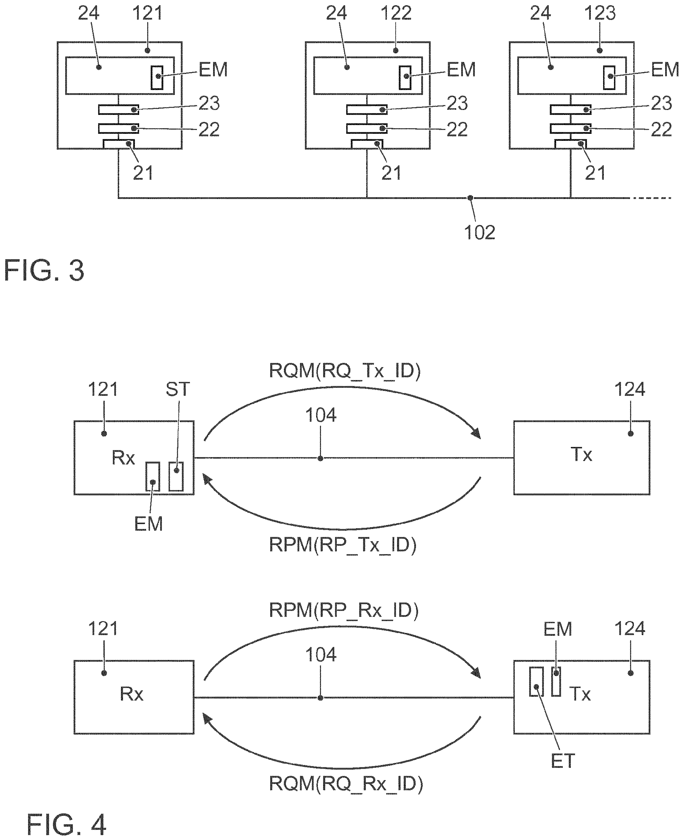

Das Prinzip der Vernetzung von elektronischen Komponenten mittels eines CAN-Busses ist in Fig. 3 für das Beispiel Antriebstrang näher dargestellt. Als Beispiel wird der Kommunikationsbus 102 für den Bereich Antriebsstrang gezeigt. Alle Steuergeräte 121 bis 123, Sensoren 124 bis 126 (nicht mehr dargestellt) und die Diagnoseschnittstelle 129 (nicht mehr dargestellt) sind an den Kommunikationsbus 104 angeschlossen. Ebenfalls ist noch das Gateway 140 an den Kommunikationsbus 102 angeschlossen (nicht mehr dargestellt). Die Busstruktur des Kommunikationsbus 102 ist linear. Als Busleitung wird die schon erwähnte verdrillte, ungeschirmte UTP-Zweidrahtleitung genutzt. In jedem Steuergerät 121 bis 123, Sensor 124 bis 126 und dem Gateway 140 und der Diagnoseschnittstelle 129 dient eine Busanpassschaltung 21 zum Anschluss an die Busleitung. Damit verbunden ist ein angepasster Physical Layer Chip 22. Der PHY Chip 22 entspricht einem CAN-Transceiver-Chip. Die Bezugszahl 23 bezeichnet den zugehörigen CAN-Controller. Mit der Bezugszahl 24 ist ein Mikrorechner bezeichnet, auf dem als Host IC die Anwendungssoftware installiert ist. Auch weitere Netzwerkprotokolle ab der Data Link Layer sind auf diesem Mikrorechner 24 installiert. Eingezeichnet ist auch ein Fehlerspeicher EM, der im nichtflüchtigen Bereich des Speichers des Mikrorechners 24 angelegt ist. Darin werden die Fehlereinträge DTC abgespeichert.

Ein Ziel des Vorschlages besteht darin, dass ein Steuergerät beim Eintragen eines Kommunikationsfehlers den Sender/Empfänger der Botschaft eindeutig benennt. In einer höheren Ausbaustufe könnte auch der komplette Weg, den die Botschaft hätte nehmen sollen, beim Eintragen des Fehlers benannt werden. Dafür ist es notwendig, dass der Empfänger einer Botschaft für jede seiner empfangenen Botschaften eine genaue Zuordnung zu einem Sender pflegt.

In der Fig. 4 sind zwei Varianten dargestellt, wie die Information über Sender/Empfänger einer Botschaft in einer Busteilnehmerstation registriert werden kann. Aus Komplexitätsreduktionsgründen wird diese Information nicht per manueller Konfiguration in das Steuergerät oder in das Fahrzeug eingebracht werden. Dies hätte den Nachteil, dass eine unüberschaubare Anzahl an Konfigurationen gepflegt werden müsste, da sich der Sender einer Botschaft von Fahrzeug zu Fahrzeug unterscheiden kann.

Deshalb wird vielmehr ein Verfahren zur Laufzeit des Kommunikationssystems eingesetzt, in dem die Sender/Empfänger einer Botschaft zur Laufzeit ermittelt werden. Zur Laufzeit bedeutet in diesem Zusammenhang, dass sich das Fahrzeug in einem vollständig montierten, fehlerfreien und betriebsfähigen Zustand befindet.

Im oberen Teil von Fig. 4 ist die Handshake-Kommunikation dargestellt, mit der im laufenden Betrieb der Sender einer Botschaft ermittelt wird. Dabei wird das Verfahren einmalig zum Beispiel am Ende der Produktion des Fahrzeuges 10 durchgeführt und die ermittelten Ergebnisse werden im nichtflüchtigen Speicher des Mikrorechners 24 persistiert.

Voraussetzung bei dem Verfahren ist, dass jede Botschaft über ein eindeutiges Adressierungsmerkmal identifiziert werden kann. Im Fall des CAN-Busses kann dafür die CAN-ID herangezogen werden. Das ist die Botschafts-ID, die bei der Arbitrierung die Priorität der Botschaft festlegt. Beim CAN-Bus steht jede CAN-Botschaft jedem CAN-Knoten zum Empfang zur Verfügung (Broadcasting). Jede CAN-Botschaft ist mittels Botschaftskennung (CAN-ID) eindeutig gekennzeichnet. Über eine knotenindividuelle Filterung in den Empfangsstationen wird entschieden, ob die empfangene Botschaft für die Empfangsstation relevant ist. Beim CAN-Busprotokoll gilt ein Eindeutigkeitsprinzip. Dieses besagt, dass eine CAN-Botschaft mit CAN-ID nur von einer Busteilnehmerstation gesendet werden darf. Die gleiche Botschaft mit identischer CAN-ID kann nicht von zwei oder mehr Busteilnehmerstationen gesendet werden.

Darüber hinaus muss jedes Steuergerät (auch Sensor usw.) ebenfalls über ein eindeutiges Adressierungsmerkmal identifiziert werden können. Hierbei könnte es sich um eine Geräte-ID handeln. Bei den Kfz-Herstellern wird typischerweise eine Liste mit allen Typen und Varianten von Steuergeräten gepflegt. In jedem Steuergerät wird die Steuergeräte-ID abgespeichert. Es wird sichergestellt, dass die Steuergeräte IDs auch dem Kundendienstmitarbeiter bekannt sind. Grundsätzlich sind Botschafts- und Steuergeräte-Adressierungsmerkmale von beliebiger Struktur und Größe möglich. In einer vorteilhaften Implementierung werden für das Botschafts-Adressierungsmerkmal (auch PDU-ID genannt, entsprechend Protocol Data Unit) ein 32 bit Identifier und für die Steuergeräte-ID ein 16 bit Identifier verwendet. Dies hat den Vorteil, dass das Verfahren auch bei Bussystemen mit geringer Bandbreite, wie beispielsweise CAN-Bus oder LIN-Bus, anwendbar ist.

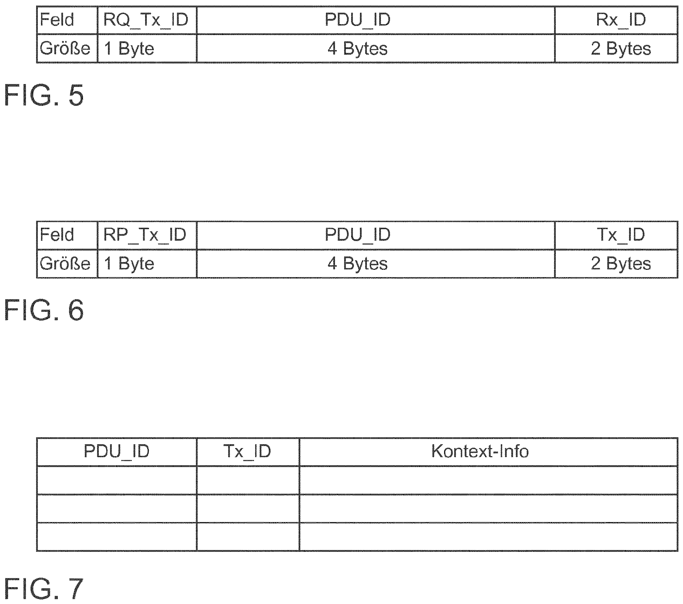

Im oberen Teil von Fig. 4 sind als Beispiel zwei Busteilnehmerstationen dargestellt, die während des im Hintergrund ablaufenden Konfigurationsverfahrens miteinander kommunizieren. Zunächst sendet der Sensor 124 eine reguläre Botschaft über den CAN-Bus 104. Damit wird z.B. der aktuelle Sensor-Messwert übertragen. Das Motorsteuergerät 121 interessiert sich dafür und übernimmt den Messwert nach der Akzeptanzfilterung. Diese Kommunikation findet im laufenden Betrieb statt und gehört nicht zur Konfigurationsphase. Während der Konfigurationsphase wird das Motorsteuergerät 121 eine Anfragenachricht RQM(RQ_Tx_ID) an die Busteilnehmerstationen zurücksenden. Diese Kommunikation läuft zusätzlich zur normalen Kommunikation im Hintergrund ab. Für diese Anfragenachricht muss auch ein Botschafts-Identifizierer vergeben werden. Dieser wird aber so vergeben, dass er nur eine niedrige Priorität hat, so dass die Botschaften des Normalbetriebes immer vorgezogen werden. Mit der Anfragenachricht RQM(RQ_Tx_ID) erfragt das Motorsteuergerät 121, welche Station die vorhergehende reguläre Botschaft mit dem Sensor-Messwert gesendet hat. Das Format der Anfragenachricht ist in der Fig. 5 dargestellt. Es besteht aus den Angaben für den Anfragenachrichten-Identifizierer RQ_Tx_ID (1 Byte), dem Botschafts-Identifizierer PDU-ID (4 Bytes) der vorhergehenden regulären Botschaft, hier die CAN-ID der regulären Botschaft, und der Steuergeräte-ID Rx-ID (2 Bytes) der anfragenden Busteilnehmerstation, also des Motorsteuergerätes 121.

Der Sensor 124 erkennt an der CAN-ID in der Anfragenachricht RQM(RQ_Tx_ID), dass Informationen zu seiner zuvor regulär gesendeten Botschaft verlangt werden und sendet daraufhin eine Antwortnachricht RPM(RQ_Tx_ID) zurück. Diese Antwortnachricht RPM(RQ_Tx_ID) enthält analog zur Anfragenachricht einen Identifizierer RP_Tx_ID (1 Byte), der ausdrückt, dass es sich um eine Antwortnachricht handelt, als auch die CAN-ID (4 Bytes) der regulären Botschaft und seine eigene Steuergeräte-ID Tx_ID (2 Bytes). Das Format der Antwortnachricht RPM(RQ_Tx_ID) ist in der Fig. 6 dargestellt. Es besteht aus den Angaben für den Antwortnachrichten-Identifizierer RP_Tx_ID (1 Byte), dem Botschafts-Identifizierer PDU-ID (4 Bytes) der angefragten regulären Botschaft, hier die CAN-ID der regulären Botschaft, und der Steuergeräte-ID Tx-ID (2 Bytes) der antwortenden Busteilnehmerstation, also des Sensors 124. In den Kontrollfeldern von Anfrage-Nachricht und Antwort-Nachricht kann neben dem Identifizierer RQ_Tx_ID oder RP_Tx_ID auch eine Versionsinformation stehen.

Bei diesem Verfahren muss sichergestellt werden, dass Anfragenachrichten RQM(RQ_Tx_ID) im gesamten Netzwerk an alle relevanten Teilnehmer verteilt werden. Auf die Anfragenachricht RQM(RQ_Tx_ID) antwortet das Steuergerät, welche der Sender der Botschaft ist, welche zu der angefragten Botschafts-ID gehört, mit der entsprechenden Antwortnachricht RPM(RQ_Tx_ID). Es muss sichergestellt sein, dass die Antwortnachricht RPM(RQ_Tx_ID) im Netzwerk bis zum anfragenden Steuergerät weitergeleitet wird. Im konkreten Beispiel des Kommunikationsnetzwerks gemäß Fig. 2 ist das Gateway 140 für die Weiterleitung entsprechend ausgelegt worden. Beim Empfang der zugehörigen Antwortnachricht RPM(RQ_Tx_ID) auf die gestellte Anfragenachricht RQM(RQ_Tx_ID) wird das Motorsteuergerät 121 die enthaltene Botschafts-ID und Steuergeräte-ID in einer Tabelle ST speichern. Darin werden für alle von dem Motorsteuergerät zu empfangenden Botschaften die zugehörigen Sendestationen eingetragen. Optional können für jeden Eintrag in dieser Tabelle weitere Kontextinformationen wie beispielsweise die Uhrzeit gespeichert werden. In einer vorteilhaften Implementierung findet vor dem Ablegen des Tabelleneintrages eine Plausibilisierung statt, ob die Botschafts-ID der Antwortnachricht zu der Botschafts-ID der Anfragenachricht passt. Sofern die Plausibilisierung negativ ausfällt, ist demensprechend kein Eintrag in der Tabelle ST zu hinterlegen. Die Einträge der Tabelle ST können grundsätzlich dauerhaft persistiert werden. Vorzugsweise wird die Tabelle ST in dem nichtflüchtigen Speicherbereich des Mikrorechners 24 abgelegt.

Ein Beispiel einer Struktur der Tabelle ST ist in Fig. 7 dargestellt. Sie hat Spalten für die Einträge von PDU-ID, als Botschafts-ID, Steuergeräte-ID Tx_ID der Sendestation und Kontextinformation. Als Kontext-Information kann z.B. Datum und Uhrzeit der Erfassung des Eintrages abgespeichert werden.

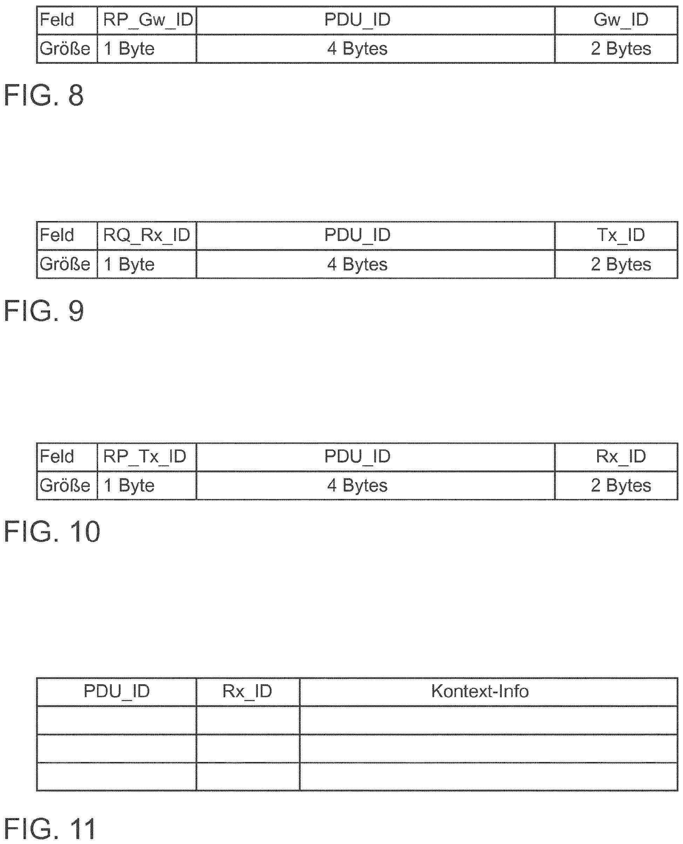

Um den ganzen Kommunikationspfad in der Tabelle ST abzulegen, kann wie folgt vorgegangen werden: Es wird wieder bei einer empfangenen Botschaft nach dem Sender der Botschaft gefragt. Dies kann wieder mit der entsprechenden Anfragenachricht erfolgen. Der originäre Sender dieser Botschaft antwortet regulär auf die Anfrage mit einer Antwortnachricht. Diese Antwortnachricht wird mit einem entsprechenden Identifizierer RP_Tx_ID in dem Kopfteil der Nachricht versehen. Alle Teilnehmer, die die Anfragenachricht weiterleiten müssen, leiten auch die Antwortnachricht des originären Senders an den Empfänger weiter. Ebenfalls antworten sie aber auch selbst auf die Anfragenachricht. Dabei verwenden sie jedoch den Nachrichtentyp RP_Gw ID mit dem sie ausdrücken, dass die Antwort von einem Gateway / Router stammt, um kenntlich zu machen, dass sie nicht der originäre Sender sind, aber Teil des Kommunikationspfades. Dieser Nachrichtentyp ist in der Fig. 8 dargestellt. Der Empfänger wird diese Antwortnachrichten sammeln und die Angaben über den Kommunikationspfad in der Tabelle abspeichern. Die Angabe über den Kommunikationspfad kann in der Spalte für die Kontextinformation der Tabelle abgelegt werden. Alternativ kann auch eine eigene Spalte für die Kontextinformation vorgesehen werden.

In einer anderen Ausführungsform können die Einträge in der Tabelle durch neue Anfragen aktualisiert werden. Diese Ausführungsformen hätten gegenüber der dauerhaften Persistierung den Nachteil, dass ein Risiko besteht, dass bei einem der Steuergeräte ein Fehler vorliegt und dann die Tabelle nicht mehr vollständig den Ausstattungszustand wiedergibt, wenn die Tabelle später aktualisiert wird. Umgekehrt sollte es möglich sein, die Tabelle zu aktualisieren. Dies ist auch immer dann erforderlich, wenn ein Steuergerät ausgetauscht wird oder Zusatzausstattung in das Fahrzeug eingebracht wird.

Sofern auf eine Anfragenachricht nicht innerhalb einer vorgegebenen Zeit eine Antwortnachricht, positiv plausibilisierbarem Inhalts erfolgt, erfolgt für diese Anfragenachricht das Setzen eines Timeout-Wertes. In Folge des Überschreitens des Timeout-Wertes darf kein Tabelleneintrag erzeugt oder aktualisiert werden. Die Zeit für den Timeout-Wert kann grundsätzlich in Abstimmung auf das Kommunikationssystem frei gewählt werden. In einer vorteilhaften Implementierung für das Fahrzeug werden Timeout-Werte zwischen 0 und 5000 ms gewählt.

Es besteht auch die alternative Möglichkeit, dass die Tabelle bereits vorkonfiguriert in dem Steuergerät 121 abgespeichert wird, wobei für jede zu empfangende Botschaft bereits ein Eintrag vorliegt und dass aber sämtliche Einträge, die in der im Hintergrund ablaufenden Konfigurationsphase nicht erfolgreich aufgelöst werden konnten, als ungültig markiert werden oder aus der Tabelle gelöscht werden. Bei dieser Variante würde durch Vorkonfiguration eine zu große Tabelle abgespeichert werden, die erst in der Konfigurationsphase individualisiert werden würde.

Im unteren Teil der Fig. 4 ist jetzt noch eine weitere alternative Ausführungsform dargestellt. Bei dieser Variante wird eine Tabelle (ET) in der Sendestation (124) angelegt und gepflegt, für alle Botschaften, die von ihr gesendet werden. In diese Tabelle (ET) würden demensprechend Botschafts-ID und Steuergeräte-ID Zuordnungen bei Erhalt einer Anfragenachricht erstellt werden, sofern das Steuergerät der Sender dieser Botschaft ist. Es sendet wiederum der Sensor 124 eine reguläre Botschaft mit dem aktuellen Messwert aus. Nach Absendung sendet der Sensor 124 eine Anfragenachricht RQM(RQ_Rx_ID) aus. Diese Anfragenachricht RQM(RQ_Rx_ID) fragt nach dem Empfänger der regulären Botschaft. Das Format dieser Anfragenachricht ist in der Fig. 9 dargestellt. Das Motorsteuergerät 121 wird diese Anfragenachricht beantworten und seine Steuergeräte-ID in der Antwortnachricht RPM(RP_Rx ID) zurücksenden. Das Format dieser Antwortnachricht ist in der Fig. 10 dargestellt. In dem Mikrorechner des Sensors 124 wird eine Tabelle ET angelegt, in der die Empfangsstationen für die von ihr ausgesendeten Botschaften verzeichnet sind. Jede Busteilnehmerstation, die Daten sendet, wird in dieser Variante eine solche Tabelle ET in der Konfigurationsphase anlegen. Der Kommunikationspfad kann bei dieser Variante entsprechend abgespeichert werden, wie im Zusammenhang mit dem oberen Teil der Fig. 4 erläutert.

Ein Beispiel einer Struktur der Tabelle ET ist in Fig. 11 dargestellt. Sie hat Spalten für die Einträge von PDU-ID, als Botschafts-ID, Steuergeräte-ID Rx_ID der Empfangsstation und Kontextinformation. Als Kontext-Information kann z.B. Datum und Uhrzeit der Erfassung des Eintrages abgespeichert werden.

Schließlich besteht auch die Möglichkeit, dass alle Botschaften, die von einem Steuergerät gesendet werden, abzufragen. Bei der Anfrage aller Botschaften eines Steuergerätes kommt ein modifiziertes Nachrichtenlayout zum Einsatz. Hierfür wird neben einem eigenen Nachrichtentyp die jeweilige Steuergeräte ID des angefragten Steuergeräts in der Anfragenachricht übertragen. Das angefragte Steuergerät antwortet daraufhin mit einer Reihe von Antwortnachrichten, wobei für es für jede seiner Botschaften, die es sendet, eine eigene Antwortnachricht generiert.

Um die Kommunikation und die ausgetauschten Inhalte und damit auch die Tabellen authentisch zu bekommen, können Anfragenachrichten und Antwortnachrichten mit kryptographischen Verfahren abgesichert werden. In einer vorteilhaften Umsetzung würde dafür beispielsweise die Secure Onboard Communication nach AUTOSAR 4.3 zum Einsatz kommen. Sofern die Authentizität einer Anfragenachricht oder einer Antwortnachricht nicht festgestellt werden kann und eine Authentizitätsprüfung erforderlich ist, sind die entsprechenden Nachrichten zu verwerfen. Es ist grundsätzlich ebenfalls möglich, dass ein Steuergerät für alle Botschaften, die es sendet, eine Antwortnachricht nach dem genannten Schema versendet, ohne vorher eine Anfrage-Nachricht zu erhalten. Dennoch liegt es in der Verantwortung der Empfänger der Antwort-Nachricht zu entscheiden, ob sie diese ohne vorherige Anfragenachricht auswerten werden oder diese ignorieren.

Mit Hilfe der über dieses Verfahren zur Laufzeit ermittelten Informationen über Sende- und Empfangsbeziehungen von Botschaften ist es möglich, bei Kommunikationsfehlern wie Botschaftsausfall, dass der Empfänger den Fehlerspeichereintrag für das Ausbleiben einer Nachricht mit der Information anreichert, von welchem Steuergerät er die Botschaft erwartet hätte. Dies entspricht dem vermeintlichen Sender einer Botschaft aus Sicht des Empfängers.

Im alternativen Fall ist es möglich, bei Kommunikationsfehlern wie Botschaftsausfall, dass der Sender den Fehlerspeichereintrag für das Ausbleiben einer Bestätigung mit der Information anreichert, von welchem Steuergerät er die Bestätigung erwartet hätte. Dies entspricht dem vermeintlichen Empfänger einer Botschaft aus Sicht des Senders.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise werden das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

### Bezugszeichenliste

- 10: Fahrzeug
- 21: Busanpassschaltung
- 22: CAN-PHY
- 23: CAN-Controller
- 24: Mikrorechner
- 100: Kfz-Elektronik
- 102: Datenbus - Fahrerassistenz
- 104: Datenbus - Antrieb
- 106: Datenbus - Fahrwerk
- 111: Fahrerassistenz-Steuergerät
- 112: RADAR-Steuergerät
- 113: Ultraschallsensor-Steuergerät
- 121: Motor-Steuergerät
- 122: ESP-Steuergerät
- 123: Getriebe-Steuergerät
- 124: Raddrehzahl-Sensor
- 125: Raddrehzahl-Sensor
- 126: Raddrehzahl-Sensor
- 127: Raddrehzahl-Sensor
- 129: Diagnoseschnittstelle
- 131: Fahrwerk-Steuergerät
- 132: Lenkhilfe-Steuergerät
- 140: Gateway
- EM: Fehlerspeicher
- ET: Empfänger-Tabelle
- ST: Sender-Tabelle

## Patentansprüche

1. Verfahren zur Bereitstellung von Informationen für die Lokalisierung von Fehlern in einem Kommunikationsnetzwerk eines Gerätes (10), bei dem die Daten über einen oder mehrere serielle Kommunikationsbusse (102, 104, 106) zwischen zwei oder mehr Busteilnehmerstationen (121, 124) übertragen werden, wobei in einer Busteilnehmerstation (121, 124) Überprüfungsmaßnahmen durchgeführt werden, die einen Kommunikationsfehler einer Nachricht von einer anderen Busteilnehmerstation (124, 121) erkennen, wobei bei Erkennen des Kommunikationsfehlers der Nachricht von dieser Busteilnehmerstation (121, 124) ein Fehlerbericht in einem Fehlerspeicher (EM) eingetragen wird, wobei in den Fehlerbericht eine Angabe über wenigstens den vermeintlichen Sender (Tx_ID) und/oder den vermeintlichen Empfänger (Rx_ID) der vom Kommunikationsfehler betroffenen Nachricht eingefügt wird, **dadurch gekennzeichnet, dass** in den Fehlerbericht eine Angabe über den Kommunikationspfad der von dem Kommunikationsfehler betroffenen Nachricht eingefügt wird.

2. Verfahren nach Anspruch 1, wobei die Angabe über den Sender (Tx_ID), den Empfänger (Rx_ID) oder den Kommunikationspfad der von dem Kommunikationsfehler betroffenen Nachricht einer Tabelle (ST, ET) in der Busteilnehmerstation (121, 124) entnommen wird, in der wenigstens verzeichnet wird, welche Nachricht von welcher Busteilnehmerstation (121, 124) versendet wird, empfangen wird oder welcher Kommunikationspfad welcher Nachricht zugeordnet ist.

3. Verfahren nach Anspruch 2, wobei die Tabelle (ST, ET) in dem laufenden Betrieb des Kommunikationsnetzwerks automatisch erstellt wird, wobei bei Eintreffen einer Nachricht die Empfangsstation (121) eine Anfragenachricht RQM(RQ_Tx_ID) an die Busteilnehmerstationen sendet, die von derjenigen Busteilnehmerstation (124) in einer Antwortnachricht RPM(RQ_Tx_ID) beantwortet wird, die die Nachricht gesendet hat oder bei Absendung einer Nachricht die Sendestation (124) eine Anfragenachricht RQM(RQ_Rx_ID) an die Busteilnehmerstationen sendet, die von derjenigen Busteilnehmerstation (121) in einer Antwortnachricht RPM(RP_Rx_ID) beantwortet wird, die die Nachricht empfangen hat.

4. Verfahren nach Anspruch 3, wobei die Aussendung der Anfragenachrichten zur Erstellung der Tabelle (ST, ET) in einer dafür vorgesehenen Konfigurationsphase, die im Hintergrund des Normalbetriebes durchgeführt wird, erfolgt.

5. Verfahren nach Anspruch 4, wobei die Konfigurationsphase manuell durch Betätigen von Schaltmitteln oder Eingeben oder Übermitteln eines Spezialcodes im Herstellerwerk nach Fertigstellung des Gerätes oder im Feld in einer Werkstatt oder einer Kundenservicestelle eingeleitet wird.

6. Verfahren nach einem der Ansprüche 3 bis 5, wobei die Anfragenachricht (RQM(RQ_Tx_ID), RQM(RQ_Rx_ID)) ein Format hat, in dem ein Feld für den Anfragenachrichtentyp (RQ_Tx_ID, RQ_Rx_ID), ein Feld (PDU-ID) für die Identifikation der von dem Kommunikationsfehler betroffenen Nachricht und ein optionales Feld (Rx_ID, Tx_ID) für die Identifikation des Busteilnehmers, von dem die Anfragenachricht (RQM(RQ_Tx_ID), RQM(RQ_Rx_ID)) versendet wird oder empfangen wird, vorgesehen wird.

7. Verfahren nach einem der Ansprüche 3 bis 6, wobei die Antwortnachricht (RPM(RQ_Tx_ID), RPM(RP_Rx_ID)) ein Format hat, in dem ein Feld für den Antwortnachrichtentyp (RP_Tx_ID, RP_Rx_ID), ein Feld (PDU-ID) für die Identifikation der von dem Kommunikationsfehler betroffenen Nachricht und ein Feld (Rx_ID, Tx_ID) für die Identifikation des Busteilnehmers, von dem die Antwortnachricht (RPM(RQ_Tx_ID), RPM(RP_Rx ID)) versendet wird, vorgesehen wird.

8. Verfahren nach einem der Ansprüche 3 bis 7, wobei bei Ausbleiben einer Antwortnachricht (RPM(RQ_Tx_ID), RPM(RP_Rx_ID)) in der Busteilnehmerstation (121, 124), die die Anfragenachricht (RQM(RQ_Tx_ID), RQM(RQ_Rx_ID)) gesendet hat, eine Zeitüberschreitungsprüfung stattfindet und der Eintrag in der Tabelle (ST, ET) unterbleibt, wenn eine Zeitüberschreitung für die Antwortnachricht (RPM(RQ_Tx_ID), RPM(RP_Rx ID)) festgestellt wird.

9. Verfahren nach einem der vorhergehenden Ansprüche, wobei zu den Überprüfungsmaßnahmen weitere Fehlerschutzmaßnahmen des Übertragungsprotokolls gehören, insbesondere Prüfcodeauswertung, Prüfung auf Einhaltung einer Bitstuffing-Regel, Auswertung von Bestätigungsnachrichten oder -Bits.

10. Verfahren nach einem der vorhergehenden Ansprüche, wobei der serielle Kommunikationsbus (102, 104, 106) von dem Typ eines CAN-Busses, entsprechend Controller Area Network-Bus, eines CAN-FD Busses, entsprechend Controller Area Network-Bus Flexible Data Rate, oder eines LIN-Busses, entsprechend Linear Network-Bus, ist.

11. Verfahren nach einem der vorhergehenden Ansprüche, wobei Anfragenachricht (RQM(RQ_Tx_ID), RQM(RQ_Rx_ID)) und Antwortnachricht (RPM(RQ_Tx_ID), RPM(RP_Rx_ID)) verschlüsselt übertragen werden.

12. Busteilnehmerstation für ein Kommunikationssystem, wobei die Busteilnehmerstation Überprüfungsmittel aufweist, um einen Kommunikationsfehler einer Nachricht von einer anderen Busteilnehmerstation zu erkennen, und Fehlerspeichermittel, die bei Erkennen eines Kommunikationsfehlers der Nachricht von der anderen Busteilnehmerstation einen Fehlerbericht in einen Fehlerspeicher (EM) eintragen, wobei die Fehlerspeichermittel in den Fehlerbericht eine Angabe über wenigstens den vermeintlichen Sender (Tx_ID) und/oder den vermeintlichen Empfänger (RX_ID) der vom Kommunikationsfehler betroffenen Nachricht einfügen, **dadurch gekennzeichnet, dass** die Fehlerspeichermittel in den Fehlerbericht eine Angabe über den Kommunikationspfad der von dem Kommunikationsfehler betroffenen Nachricht eingefügt wird.

13. Busteilnehmerstation nach Anspruch 12, wobei die Überprüfungsmittel ausgelegt sind, bei Eintreffen einer Nachricht oder bei Absenden einer Nachricht eine Anfragenachricht (RQM(RQ_Tx_ID), RQM(RQ_Rx_ID)) an die Busteilnehmerstationen zu senden, die von derjenigen Busteilnehmerstation (124) in einer Antwortnachricht (RPM(RQ_Tx_ID), RPM(RP_Rx ID)) beantwortet wird, die die Nachricht gesendet hat oder von derjenigen Busteilnehmerstation (121), die die Nachricht empfangen hat, um in einer Konfigurationsphase mit den Informationen in den Antwortnachrichten eine Tabelle (ST, ET) anzulegen, in der wenigstens verzeichnet wird, welche Nachricht von welcher Busteilnehmerstation versendet wird, empfangen wird oder welcher Kommunikationspfad welcher Nutznachricht zugeordnet ist.

14. Fahrzeug, **dadurch gekennzeichnet, dass** in dem Fahrzeug ein Kommunikationssystem mit einer Busteilnehmerstation nach Anspruch 12 oder 13 verbaut ist.

## Claims

1. A method for providing information for the localization of errors in a communication network of a device (10), wherein the data are transmitted via one or more serial communication buses (102, 104, 106) between two or more bus subscriber stations (121, 124), wherein checking measures are carried out in a bus subscriber station (121, 124), which measures detect a communication error in a message from another bus subscriber station (124, 121), wherein when the communication error in the message from this bus subscriber station (121, 124) is detected, an error report is entered in an error memory (EM), wherein an indication of at least the supposed transmitter (Tx_ID) and/or the supposed recipient (Rx_ID) of the message affected by the communication error is inserted into the error report, **characterized in that** an indication of the communication path of the message affected by the communication error is inserted into the error report.

2. The method according to Claim 1, wherein the indication of the transmitter (Tx_ID), the receiver (Rx_ID) or the communication path of the message affected by the communication error is taken from a table (ST, ET) in the bus subscriber station (121, 124), in which table it is at least recorded which message is sent or received by which bus subscriber station (121, 124), or which communication path is assigned to which message.

3. The method according to Claim 2, wherein the table (ST, ET) is automatically created during the ongoing operation of the communication network, wherein when a message arrives, the receiving station (121) sends a request message RQM(RQ_Tx_ID) to the bus subscriber stations, which request message is answered in a response message RPM(RQ_Tx_ID) by the bus subscriber station (124) that has sent the message, or when a message is sent, the sending station (124) sends a request message RQM(RQ_Rx_ID) to the bus subscriber stations, which request message is answered in a response message RPM(RP_Rx_ID) by the bus subscriber station (121) that has received the message.

4. The method according to Claim 3, wherein the request messages to create the table (ST, ET) are sent in a configuration phase provided therefor and performed in the background of normal operation.

5. The method according to Claim 4, wherein the configuration phase is initiated manually by actuating switching means or entering or transmitting a special code in the manufacturer's plant after finishing the device, or in the field in a workshop or a customer service location.

6. The method according to one of Claims 3 to 5, wherein the request message (RQM(RQ_Tx_ID), RQM(RQ_Rx_ID)) has a format in which is provided a field for the request message type (RQ_Tx_ID, RO_Rx_ID), a field (PDU-ID) for the identification of the message affected by the communication error, and an optional field (Rx_ID, Tx_ID) for the identification of the bus subscriber by which the request message (RQM(RQ_Tx_ID), RQM(RQ_Rx_ID)) is sent or received.

7. The method according to one of Claims 3 to 6, wherein the response message (RPM(RQ_Tx_ID), RPM(RP_Rx_ID)) has a format in which is provided a field for the response message type (RP_Tx_ID, RP_Rx_ID), a field (PDU-ID) for the identification of the message affected by the communication error, and a field (Rx_ID, Tx_ID) for the identification of the bus subscriber from which the response message (RPM(RQ_Tx_ID), RPM(RP_Rx_ID)) is sent.

8. The method according to one of Claims 3 to 7, wherein in the absence of a response message (RPM(RQ_Tx_ID), RPM(RP_Rx_ID)), a timeout check takes place in the bus subscriber station (121, 124) that has sent the request message (RQM(RQ_Tx_ID), RQM(RQ_Rx_ID)), and the entry in the table (ST, ET) is omitted if a timeout for the response message (RPM(RQ_Tx_ID), RPM(RP_Rx_ID)) is determined.

9. The method according to one of the preceding claims, wherein the checking measures include additional error protection measures of the transmission protocol, in particular test code evaluation, checking compliance with a bit stuffing rule, and evaluating confirmation messages or confirmation bits.

10. The method according to one of the preceding claims, wherein the serial communication bus (102, 104, 106) is of the type of a CAN bus, i.e., a controller area network bus, of a CAN FD bus, i.e., a controller area network bus with flexible data rate, or of a LIN bus, i.e., a linear network bus.

11. The method according to one of the preceding claims, wherein the request message (RQM(RQ_Tx_ID), RQM(RQ_Rx_ID)) and the response message (RPM(RQ_Tx_ID), RPM(RP_Rx_ID)) are transmitted encrypted.

12. A bus subscriber station for a communication system, wherein the bus subscriber station has checking means for detecting a communication error in a message from another bus subscriber station, and error storage means which, when a communication error in the message from the other bus subscriber station is detected, enter an error report into an error memory (EM), wherein the error storage means insert into the error report an indication of at least the supposed transmitter (Tx_ID) and/or the supposed receiver (RX_ID) of the message affected by the communication error, **characterized in that** the error storage means insert into the error report an indication of the communication path of the message affected by the communication error.

13. The bus subscriber station according to Claim 12, wherein when a message arrives or when a message is sent, the checking means are configured to send to the bus subscriber stations a request message (RQM(RQ_Tx_ID), RQM(RQ_Rx_ID)) which is answered in a response message (RPM(RQ_Tx_ID), RPM(RP_Rx_ID)) by the bus subscriber station (124) that has sent the message, or by the bus subscriber station (121) that has received the message, in order to create, in a configuration phase with the information in the response messages, a table (ST, ET) in which it is at least recorded which message is sent or received by which bus subscriber station, or which communication path is assigned to which user message.

14. A vehicle **characterized in that** a communication system with a bus subscriber station according to Claim 12 or 13 is installed in the vehicle.

## Revendications

1. Procédé pour la fourniture d'informations pour la localisation d'erreurs dans un réseau de communication d'un appareil (10), dans lequel les données sont transmises à travers un ou plusieurs bus de communication série (102, 104, 106) entre deux ou plusieurs stations participantes au bus (121, 124), dans une station participante au bus (121, 124) des mesures de vérification étant effectuées, lesquelles reconnaissent une erreur de communication d'un message provenant d'une autre station participante au bus (124, 121), lors de la reconnaissance de l'erreur de communication du message, un rapport d'erreur étant enregistré dans une mémoire d'erreur (EM) par cette station participante au bus (121, 124), dans le rapport d'erreur, une indication étant insérée concernant au moins l'émetteur présumé (Tx_ID) et/ou le récepteur présumé (Rx_ID) du message concerné par l'erreur de communication, **caractérisé en ce que** dans le rapport d'erreur, une indication est insérée concernant le chemin de communication du message concerné par l'erreur de communication.

2. Procédé selon la revendication 1, dans lequel l'indication concernant l'émetteur (Tx_ID), le récepteur (Rx_ID) ou le chemin de communication du message concerné par l'erreur de communication est extrait d'un tableau (ST, ET) dans la station participante au bus (121, 124), dans laquelle est au moins enregistré quel message est envoyé ou reçu par quelle station participante au bus (121, 124) ou quel chemin de communication est associé à quel message.

3. Procédé selon la revendication 2, dans lequel le tableau (ST, ET) est créé automatiquement lors du fonctionnement du réseau de communication, dans lequel lors de l'arrivée d'un message la station de réception (121) envoie un message de demande RQM (RQ_Tx_ID) aux stations participantes au bus, auquel il est répondu dans un message de réponse RPM (RQ_Tx_ID) par la station participante au bus (124) qui a envoyé le message ou, lors de l'envoi d'un message la station émettrice (124) envoie un message de demande RQM (RQ_Rx_ID) aux stations participantes au bus, auquel il est répondu dans un message de réponse RPM (RP_Rx_ID) par la station participante au bus (121) qui a reçu le message.

4. Procédé selon la revendication 3, dans lequel l'émission des messages de demande est effectuée pour la création du tableau (ST, ET) dans une phase de configuration prévue à cet effet, qui est exécutée en arrière-plan du fonctionnement normal.

5. Procédé selon la revendication 4, dans lequel la phase de configuration est lancée manuellement par l'actionnement de moyens de commutation ou la saisie ou la transmission d'un code spécial dans l'usine de fabrication après la fabrication de l'appareil ou sur le terrain dans un atelier ou un point de service client.

6. Procédé selon l'une quelconque des revendications 3 à 5, dans lequel le message de demande (RQM(RQ_Tx_ID), RQM(RQ_Rx_ID)) a un format dans lequel sont prévus un champ pour le type de message de demande (RQ Tx_ID, RQ_Rx_ID), un champ (PDU-ID) pour l'identification du message concerné par l'erreur de communication et un champ facultatif (Rx_ID, Tx_ID) pour l'identification du participant au bus qui envoie ou reçoit le message de demande (RQM(RQ_Tx_ID), RQM(RQ_Rx_ID)).

7. Procédé selon l'une quelconque des revendications 3 à 6, dans lequel le message de réponse (RPM(RQ_Tx_ID), RPM(RQ_Rx_ID)) a un format dans lequel sont prévus un champ pour le type de message de réponse (RP_Tx_ID, RP_Rx_ID), un champ (PDU-ID) pour l'identification du message concerné par l'erreur de communication et un champ (Rx_ID, Tx_ID) pour l'identification du participant au bus qui envoie le message de réponse (RPM(RQ_Tx_ID), RPM(RQ_Rx_ID)).

8. Procédé selon l'une quelconque des revendications 3 à 7, dans lequel, lors de l'absence d'un message de réponse (RPM(RQ_Tx_ID), RPM(RP_Rx_ID)), une vérification de dépassement de temps a lieu dans la station participante au bus (121, 124) qui a envoyé le message de demande (RQM(RQ_Tx_ID), RQM(RQ_Rx_ID)) et l'entrée dans le tableau (ST, ET) est omise si un dépassement de temps est constaté pour le message de
réponse (RPM(RQ_Tx_ID), RPM(RP_Rx_ID)).

9. Procédé selon l'une quelconque des revendications précédentes, dans lequel d'autres mesures de protection contre les erreurs du protocole de transmission font partie des mesures de vérification, en particulier l'évaluation du code de vérification, la vérification du respect d'une règle de bourrage de bits, l'évaluation de messages ou de bits de confirmation.

10. Procédé selon l'une quelconque des revendications précédentes, dans lequel le bus de communication série (102, 104, 106) est du type d'un bus CAN, à savoir un bus Controller Area Network, d'un bus CAN-FD, à savoir un bus Controller Area Network Flexible Data Rate, ou un bus LIN, à savoir un bus Linear Network.

11. Procédé selon l'une quelconque des revendications précédentes, dans lequel le message de demande (RQM(RQ_Tx_ID), RQM(RQ_Rx_ID)) et le message de réponse (RPM(RQ_Tx_ID), RPM(RP_Rx_ID)) sont transmis chiffrés.

12. Station participante au bus pour un système de communication, dans laquelle la station participante au bus présente des moyens de vérification, pour reconnaitre une erreur de communication d'un message provenant d'une autre station participante au bus et des moyens de mémorisation d'erreurs, qui, lors de la reconnaissance d'une erreur de communication du message provenant de l'autre station participante au bus, enregistrent un rapport d'erreur dans une mémoire d'erreur (EM), les moyens de mémorisation d'erreurs insérant dans le rapport d'erreur une indication concernant au moins l'émetteur présumé (Tx_ID) et/ou le récepteur présumé (RX_ID) du message concerné par l'erreur de communication, **caractérisée en ce que** les moyens de mémorisation d'erreurs insèrent dans le rapport d'erreur une indication concernant le chemin de communication du message concerné par l'erreur de communication.

13. Station participante au bus selon la revendication 12, dans laquelle les moyens de vérification sont conçus pour envoyer, lors de l'arrivée d'un message ou de l'envoi d'un message, un message de demande (RQM(RQ_Tx_ID), RQM(RQ_Rx_ID)) aux stations participantes au bus, auquel il est répondu dans un message de réponse (RPM(RQ_Tx_ID), RPM(RP_Rx_ID)) par la station participante au bus (124) qui a envoyé le message ou par la station participante au bus (121) qui a reçu le message, pour établir au moyen des informations contenues dans les messages de réponse, dans une phase de configuration, un tableau (ST, ET), dans lequel est au moins enregistré quel message est envoyé ou reçu par quelle station participante au bus ou quel chemin de communication est associé à quel message utile.

14. Véhicule, **caractérisé en ce qu'**un système de communication comprenant une station participante au bus selon la revendication 12 ou 13 est monté dans le véhicule.
